# EUROPEAN PATENT SPECIFICATION

(11) **EP 3 744 541 B1**
(45) Date of publication and mention of the grant of the patent: **05.10.2022**
(21) Application number: 19776865.8
(22) Date of filing: 14.03.2019
(51) Int. Cl.: B60H 1/00, F04D 29/40, F04D 29/42, F04D 29/62

(54) **BLOWING DEVICE FOR VEHICLE AIR CONDITIONING**
BLASVORRICHTUNG FÜR FAHRZEUGKLIMATISIERUNG
DISPOSITIF DE SOUFFLAGE D'AIR POUR CLIMATISATION DE VÉHICULE

(30) Priority: 27.03.2018 JP 2018060431
(43) Date of publication of application: 02.12.2020
(73) Proprietor: Japan Climate Systems Corporation, Higashihiroshima-shi, Hiroshima 739-0153 (JP)
(72) Inventor: TANAKA Takeshi, Higashihiroshima-shi, Hiroshima 739-0153 (JP); HAKATA Toshiki, Higashihiroshima-shi, Hiroshima 739-0153 (JP); YONEHARA Shinji, Higashihiroshima-shi, Hiroshima 739-0153 (JP)
(74) Representative: Germain Maureau
(86) International application number: PCT/JP2019/010658
(87) International publication number: WO 2019/188367

(56) References cited:
- WO-A1-2017/208657
- DE-U1- 8 626 016
- JP-A- 2012 166 658
- JP-A- 2012 166 658
- JP-A- 2017 171 020
- JP-B2- 5 304 719
- JP-B2- 5 304 719
- US-A1- 2010 284 735

## Description

### TECHNICAL FIELD

The present invention relates to vehicle air-conditioning air blowers each mounted on an automobile, for example, to blow air-conditioning air, and more particularly relates to a structure having a bell mouth orifice.

### BACKGROUND ART

Typically, an air conditioner mounted on a vehicle selects either air inside a cabin (inside air) or air outside the cabin (outside air) to blow the selected air as air-conditioning air, and the blown air has its temperature controlled by a cooling heat exchanger and a heating heat exchanger, and is then fed to areas inside the cabin.

Recently commercialized vehicle air-conditioning air blowers for blowing air-conditioning air include a device that is switchable among an inside-air circulation mode in which only the inside air is blown, an outside-air introduction mode in which only the outside air is blown, and an inside-outside air double flow mode in which both inside air and outside air are blown. That is to say, as disclosed in JP 2000-296710, JP 2001-206044, JP 2011-201501, JP 2015-67260 and JP 5304719, a casing of a vehicle air-conditioning air blower has an inside air inlet, an outside air inlet, an upper air passage, and a lower air passage. The upper and lower air passages each include therein a blower fan. These two blower fans are driven by a common motor. The casing is provided with an inside/outside air switching damper for opening and closing the inside air inlet and the outside air inlet. The inside/outside air switching damper allows switching to be made among the inside-air circulation mode in which only the inside air inlet is opened, the outside-air introduction mode in which only the outside air inlet is opened, and the inside/outside-air double flow mode in which the inside air inlet and the outside air inlet are opened. If the two blower fans are rotated, and the inside-air circulation mode is selected, the inside air introduced through the inside air inlet flows through the upper and lower air passages. Alternatively, if the outside-air introduction mode is selected, the outside air introduced through the outside air inlet flows through the upper and lower air passages. Still alternatively, if the inside/outside-air double flow mode is selected, the outside air introduced through the outside air inlet flows through the upper air passage, and the inside air introduced through the inside air inlet flows through the lower air passage.

A vehicle air-conditioning air blower of JP 2015-67260 includes a scroll casing housing a blower fan. The scroll casing includes an upper scroll casing and a lower scroll casing. An upper portion of the lower scroll casing is fitted into a lower portion of the lower scroll casing, thereby integrating the upper and lower scroll casings together.

The scroll casing includes therein a partition plate extending horizontally through a vertically intermediate portion of the scroll casing. The partition plate partitions the interior of the scroll casing into upper and lower air passages. A peripheral portion of the partition plate is sandwiched between the lower portion of the upper scroll casing and the upper portion of the lower scroll casing from above and below.

In the case of the vehicle air-conditioning air blower of JP 5304719, a bell mouth component having a bell mouth orifice disposed to face the lower side of a blower fan is fixed to a flange of a motor. The bell mouth component is assembled to a casing together with the motor with the bell mouth component fixed to the flange portion of the motor.

### SUMMARY OF THE INVENTION

### TECHNICAL PROBLEM

In a vehicle air-conditioning air blower that is switchable to inside-outside air double flow mode as in the JP 2000-296710, JP 2001-206044, JP 2011-201501, JP 2015-67260 and JP 5304719, a casing includes an upper air passage and a lower air passage inside, and is further required to include a bell mouth component having a bell mouth orifice disposed to face the lower side of the blower fan so as to improve air blowing efficiency. In the JP 5304719 the bell mouth component which is a separate member from the casing is fixed to a flange of a motor. The bell mouth component which is a separate member from the casing as described above is advantageous in improvement of degree of freedom in forming the bell mouth component.

However, the bell mouth component which is a separate member from the casing increases the number of components, which may cause difficulty in assembly to a target position. Specifically, if the bell mouth component which is a separate member from the casing is assembled to the flange of the motor, at least three members, namely the bell mouth component, the casing, and the motor, are required to be assembled. Since each member is allowed to have a deviation in shape within the range of manufacturing tolerance, a variation in a portion between the flange of the motor and the bell mouth component, a variation in a portion between the bell mouth component and the casing, and a variation in a portion between the flange of the motor and the casing are generated. Trying to absorb such variations generated in the three portions makes the assembly itself be difficult, and causes unreasonable force to exert on at least one component of the bell mouth component, casing, or flange of the motor, which may result in deformation of or damage to the component.

In view of the foregoing background, it is therefore an object of the present invention to make it possible to absorb variations generated in the respective portions and perform the assembly easily if the bell mouth component is a separate member from the casing.

JP 2012 166658 and JP 5 304719 relate to a vehicle air-conditioning air blower according to the preamble of claim 1. DE 86 26 016 relates to a device for fixing a fan into a casing.

### SOLUTION TO THE PROBLEM

In order to achieve the above objective, a first aspect of the invention is directed to a vehicle air-conditioning air blower as defined by claim 1 and includes: a casing having an inside air inlet through which air inside a cabin is introduced into the casing, and an outside air inlet through which air outside the cabin is introduced into the casing, the casing further having a first air passage and a second air passage each communicating with both of the inside air inlet and the outside air inlet, the casing housing an inside/outside air switching damper that opens and closes the inside air inlet and the outside air inlet; a centrifugal blower fan disposed inside the casing and having a first blade and a second blade; a motor disposed below the blower fan and having a rotation shaft that rotates to drive the blower fan and that extends vertically; and a bell mouth component being a separate member from the casing and having a bell mouth orifice disposed to face a lower side of the blower fan, the first blower fan sending air in the first air passage as air-conditioning air by the first blade, the second blower fan sending air in the second air passage as air-conditioning air by the second blade. The motor has a lower portion that includes a motor flange extending in the radial direction of the rotation shaft and being fixed to a bottom wall portion of the casing. The bell mouth component includes an engagement portion engaged with the motor flange with the bell mouth component not fixed to the motor flange while the motor flange is being detached from the casing.

According to the first aspect of the invention, if the bell mouth component is a separate member from the casing, the bell mouth component can be integrated together with the motor flange with the bell mouth component not fixed to the motor flange. This allows the variations in the respective portions to be absorbed at the time of the assembly, thereby allowing the assembly to be performed easily.

With this configuration, the vehicle air-conditioning air blower operates in the inside-air circulation mode in which inside air is introduced through the inside air inlet thereinto. In the inside-air circulation mode, the blower fan rotating allows the inside air introduced through the inside air inlet to flow through the first and second air passages by the first and second blades and to be then sent as air-conditioning air. If an operation of the inside/outside air switching damper allows the inside air inlet to close, and allows the outside air inlet to open, the vehicle air-conditioning air blower operates in the outside-air introduction mode in which outside air is introduced through the outside air inlet thereinto. In the outside-air introduction mode, the blower fan rotating allows the outside air introduced through the outside air inlet to flow through the first and second air passages and to be then sent as air-conditioning air. Further, if the inside air inlet and the outside air inlet are opened by an operation of the inside/outside air switching damper, the vehicle air-conditioning air blower operates in the inside-outside air double flow mode to rotate the blower fan. With the rotation, the outside air introduced through the outside air inlet flows through one of the first and second air passages, and the inside air introduced through the inside air inlet flows through the other air passage. Thus, a combination of the outside air and the inside air is sent as air-conditioning air. That is to say, an optional one of the outside-air introduction mode, the inside-air circulation mode, and the inside-outside air double flow mode can be selected, and air can be sent in the selected mode.

When the bell mouth component is assembled to the casing, the engagement portion of the bell mouth component is engaged with the motor flange before assembling the bell mouth component to the casing. In the engagement, the motor flange is detached from the casing, and the bell mouth component is integrated with the motor flange but is not fixed to this motor flange. Thus, the bell mouth component is displaceable toward the motor flange. Note that the state in which the bell mouth component is not fixed to the motor flange means that the bell mouth component is displaceable without fixing to a certain position and is movable toward the motor flange.

Accordingly, even if a variation in a portion between the motor flange and the bell mouth component, a variation in a portion between the bell mouth component and the casing, and a variation in a portion between the motor flange and the casing are generated when the motor flange is attached to the casing, displacement of the bell mouth component toward the motor flange absorbs the variations generated in the respective portions, thereby allowing the motor flange and the bell mouth component to be assembled to the casing without difficulty.

A second aspect of the invention is an embodiment of the first aspect of the invention. In the second aspect, the bell mouth component is sandwiched between the casing and the motor flange from above and below with the motor flange assembled to the casing.

According to the second aspect of the invention, the bell mouth component can be sandwiched between the casing and the motor flange from above and below, thereby allowing reduction of vibrations and noises.

With this configuration, when the motor flange is assembled to the casing, the bell mouth component is sandwiched between the casing and the motor flange from above and below, thereby reducing wobbling of the bell mouth component.

A third aspect of the invention is an embodiment of the first aspect of the invention. In the third aspect, the bell mouth plate has a fitting portion that is fitted to a protrusion formed in the casing, and the fitting portion has a projection in contact with an outer surface of the protrusion.

According to the third aspect of the invention, the projection of the fitting portion of the bell mouth plate is in contact with the outer surface of the protrusion of the casing, thereby allowing reduction of vibrations and noises.

With this configuration, the projection of the fitting portion is in contact with the outer surface of the protrusion with the fitting portion of the bell mouth plate fitted to the protrusion of the casing, thereby reducing wobbling of the bell mouth plate from the casing.

A fourth aspect of the invention is an embodiment of the third aspect of the invention. In the fourth aspect, the projection is disposed to be in press contact with the outer surface of the protrusion in an axial direction of the rotation shaft.

According to the fourth aspect of the invention, the projection of the fitting portion of the bell mouth plate is in press contact with the outer surface of the protrusion of the casing in the axial direction of the rotation shaft, thereby allowing reduction of axial wobbling of the bell mouth plate.

With this configuration, the projection of the fitting portion is in press contact with the outer surface of the protrusion in the axial direction of the rotation shaft with the fitting portion of the bell mouth plate fitted to the protrusion of the casing, thereby reducing axial wobbling of the bell mouth plate.

A fifth aspect of the invention is an embodiment of the third aspect of the invention. In the fifth aspect, the projection is disposed to be in press contact with the outer surface of the protrusion in the radial direction of the rotation shaft.

According to the fifth aspect of the invention, the projection of the fitting portion of the bell mouth plate is in press contact with the outer surface of the protrusion of the casing in the radial direction of the rotation shaft, thereby allowing reduction of radial wobbling of the bell mouth plate.

With this configuration, the projection of the fitting portion is in press contact with the outer surface of the protrusion in the radial direction of the rotation shaft with the fitting portion of the bell mouth plate fitted to the protrusion of the casing, thereby reducing wobbling of the bell mouth plate in the radial direction.

A sixth aspect of the invention is an embodiment of the third aspect of the invention. In the sixth aspect, the projection includes first projections disposed to be in press contact with the outer surface of the protrusion in an axial direction of the rotation shaft and second projections disposed to be in press contact with the outer surface of the protrusion in a radial direction of the rotation shaft.

This configuration reduces axial and radial wobbling of the bell mouth plate.

A seventh aspect of the invention is an embodiment of the sixth aspect of the invention. In the seventh aspect, the first projections are positioned between the legs apart in the circumferential direction of the rotation shaft.

With this configuration, the first projections are positioned between the legs of the bell mouth component.

An eight aspect of the invention is an embodiment of the sixth aspect of the invention. In the eight aspect, the second projections are positioned at the respective legs.

With this configuration, the second projections are positioned to correspond to the respective legs of the bell mouth component.

The seventh and eight aspects of the invention allows the projection of the fitting portion of the bell mouth plate to be certainly in press contact with the outer surface of the protrusion of the casing with the bell mouth plate supported by the legs, thereby allowing reduction of wobbling of the bell mouth plate.

A ninth aspect of the invention is an embodiment of the third aspect of the invention. In the ninth aspect, the fitting portion has a peripheral wall portion surrounding the bell mouth orifice and protruding upward, and only a portion of the peripheral wall portion in the circumferential direction has a slit extending from a tip to a base end in a protrusion direction of the peripheral wall portion.

The ninth aspect of the invention allows reduction of fitting force in fitting of the fitting portion of the bell mouth plate to the protrusion of the casing, thereby allowing the assembly to be facilitated.

With this configuration, the fitting portion of the bell mouth plate surrounds the bell mouth orifice, so that the fitting portion is fitted to a wide area of the casing. In this case, since the peripheral wall portion of the fitting portion has a slit, the peripheral wall portion can be deflected and deformed easily.

A tenth aspect of the invention is an embodiment of the third aspect of the invention. In the tenth aspect, the casing has a guide portion for guiding the fitting portion to the protrusion so as to protrude downward.

According to the tenth aspect of the invention, the guide portion guides the fitting portion of the bell mouth plate to the protrusion of the casing, thereby allowing the assembly to be facilitated.

With this configuration, when the fitting portion of the bell mouth plate is fitted to the protrusion of the casing, the fitting portion is guided toward the protrusion by the guide portion.

### BRIEF DESCRIPTION OF THE DRAWINGS

[FIG. 1] FIG. 1 is a back view of a vehicle air-conditioning air blower according to an embodiment of the present invention.
[FIG. 2] FIG. 2 is a left side view of the vehicle air-conditioning air blower.
[FIG. 3] FIG. 3 is a bottom view of the vehicle air-conditioning air blower.
[FIG. 4] FIG. 4 is a cross-sectional view taken along line IV-IV shown in FIG. 1.
[FIG. 5] FIG. 5 is a longitudinal sectional view illustrating an internal structure of the vehicle air-conditioning air blower.
[FIG. 6] FIG. 6 is a plan view of a bell mouth component.
[FIG. 7] FIG. 7 is a view of a bell mouth component as viewed in the B direction of FIG. 6.
[FIG. 8] FIG. 8 is a view of a bell mouth component as viewed in the C direction of FIG. 6.
[FIG. 9] FIG. 9 is an enlarged view of a lower portion of a cross-sectional view taken along line IV-IV shown in FIG. 1.
[FIG. 10] FIG. 10 illustrates a bell mouth component assembled to a motor flange viewed from above, omitting a blower fan.
[FIG. 11] FIG. 11 is a perspective view of a bell mouth component detached from a motor flange viewed from above.

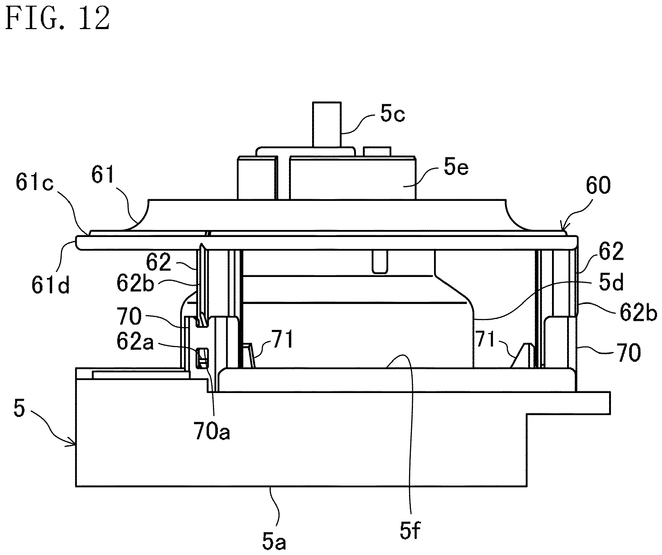

[FIG. 12] FIG. 12 is a side view of a bell mouth component assembled to a motor flange, omitting a blower fan.

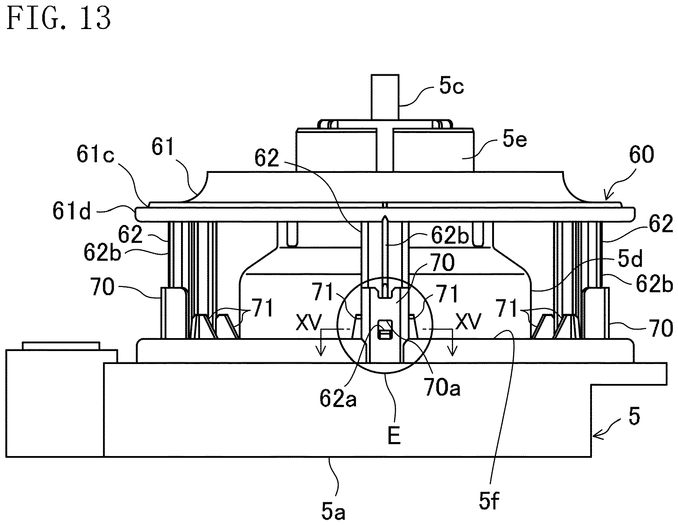

[FIG. 13] FIG. 13 is a front view of a bell mouth component assembled to a motor flange, omitting a blower fan.
[FIG 14] FIG. 14 is an enlarged view of a portion E of FIG. 13.
[FIG. 15] FIG. 15 is a cross-sectional view taken along line XV-XV shown in FIG. 13.
[FIG 16] FIG. 16 is an enlarged view of a portion F of FIG. 6.
[FIG 17] FIG. 17 is an enlarged view of a portion G of FIG. 6.
[FIG. 18] FIG. 18 is a cross-sectional view taken along line XVIII-XVIII shown in FIG. 16, illustrating a fitting portion fitted to a protrusion.
[FIG. 19] FIG. 19 is a cross-sectional view taken along line XIX-XIX shown in FIG. 16, illustrating a fitting portion fitted to a protrusion.
[FIG. 20] FIG. 20 is a view corresponding to FIG. 7, illustrating a first variation of the embodiment.
[FIG. 21] FIG. 21 is a bottom view of a lower scroll casing with a bell mouth component assembled, illustrating a second variation of the embodiment.
[FIG. 22] FIG. 22 is a cross-sectional view taken along line XXII-XXII shown in FIG. 21.

### DESCRIPTION OF EMBODIMENTS

Embodiments of the present invention will now be described in detail with reference to the drawings. The following description of preferred embodiments is only an example.

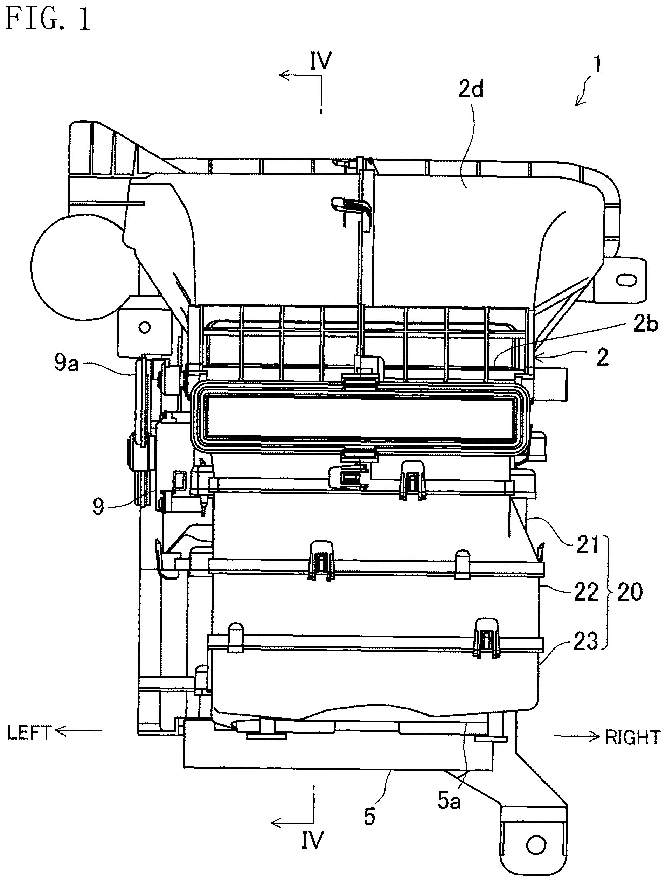

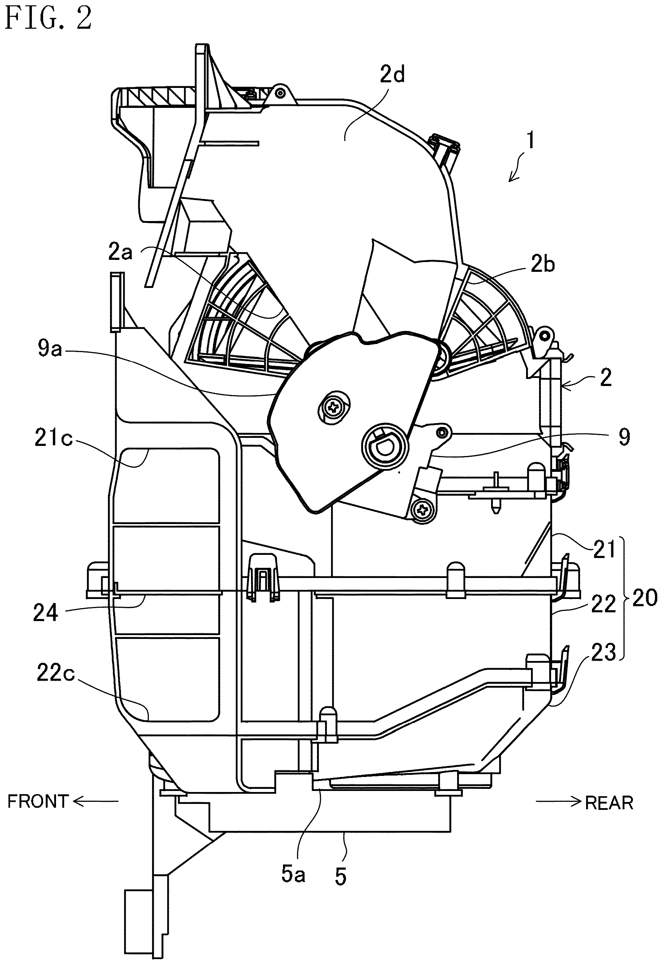

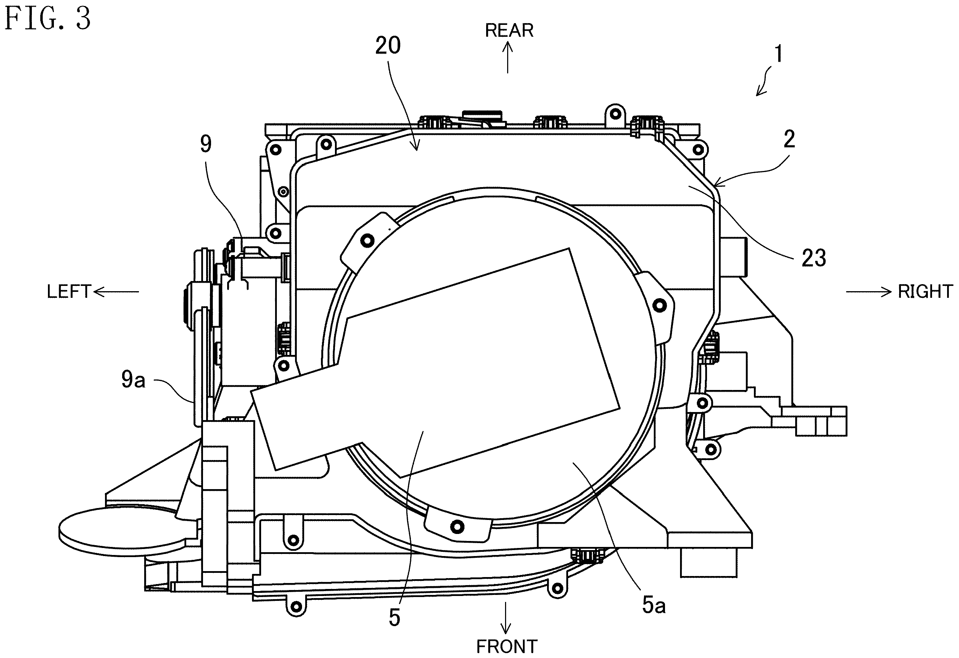

FIG. 1 illustrates a vehicle air-conditioning air blower 1 according to an embodiment of the present invention, as viewed from the rear side of a vehicle. FIG. 2 illustrates the vehicle air-conditioning air blower 1, as viewed from the left side of the vehicle. FIG. 3 illustrates the vehicle air-conditioning air blower 1, as viewed from the lower side of the vehicle. This vehicle air-conditioning air blower 1 is disposed in, for example, a cabin of an automobile to blow air-conditioning air, and forms a vehicle air conditioner together with an air conditioning unit (not shown) and a refrigeration cycle system.

The air conditioning unit includes, for example, a cooling heat exchanger serving as an evaporator of a refrigeration cycle, a heating heat exchanger serving as a heater core, an air mixing damper, a blowing direction switching damper, and an air-conditioning casing housing these components. Air-conditioning air blown from the vehicle air-conditioning air blower 1 is introduced into the air-conditioning casing, and passes through the cooling heat exchanger and the heating heat exchanger to generate air-conditioned wind having an intended temperature. Then, the air-conditioned wind is fed to areas inside the cabin in accordance with a blowout mode selected by the blowing direction switching damper. The temperature of the air-conditioned wind is adjusted by the amount of air which passes through the heating heat exchanger which is determined by the air mixing damper.

In the following description of this embodiment, the front, rear, left, and right sides of the vehicle will be simply referred to as the "front," "rear," "left," and "right," respectively. These definitions are merely prepared for easy understanding, and do not limit how the vehicle air-conditioning air blower is actually used, how the vehicle air-conditioning air blower is actually installed, and how the vehicle air-conditioning air blower is actually assembled.

The vehicle air-conditioning air blower 1 is housed in an instrument panel (not shown) arranged in a front end portion of the cabin of the vehicle together with the air conditioning unit. The air conditioning unit is disposed in a substantially laterally central portion of the interior of the instrument panel, while the vehicle air-conditioning air blower 1 is disposed inside the instrument panel on the passenger's side of the air conditioning unit (on the left side of the air conditioning unit in the case of a right-hand drive vehicle, or on the right side thereof in the case of a left-hand drive vehicle). This embodiment illustrates a situation where the vehicle air-conditioning air blower 1 is disposed in a right portion of the vehicle. However, if a vehicle air-conditioning air blower 1 is disposed in a left portion of the vehicle, this vehicle air-conditioning air blower 1 has a structure bilaterally symmetrical to that of the vehicle air-conditioning air blower 1 according to this embodiment. Thus, this situation will not be described in detail.

### (Configuration of Vehicle)

Although not shown, the vehicle including the vehicle air-conditioning air blower 1 includes a dashboard (a partition member) for separating an engine compartment and a cabin from each other. The engine compartment is formed in a front portion of the vehicle, and includes an engine, a transmission, and other components. The dashboard extends in a substantially vertical direction. A cowl extending in a lateral direction is disposed on an upper portion of the dashboard. The cowl has a communication port communicating with the outside of the cabin. Since the cowl is disposed outside the cabin, rainwater, car-washing water, snow, and any other substance may enter the cowl.

### (Configuration of Vehicle Air-Conditioning Air Blower)

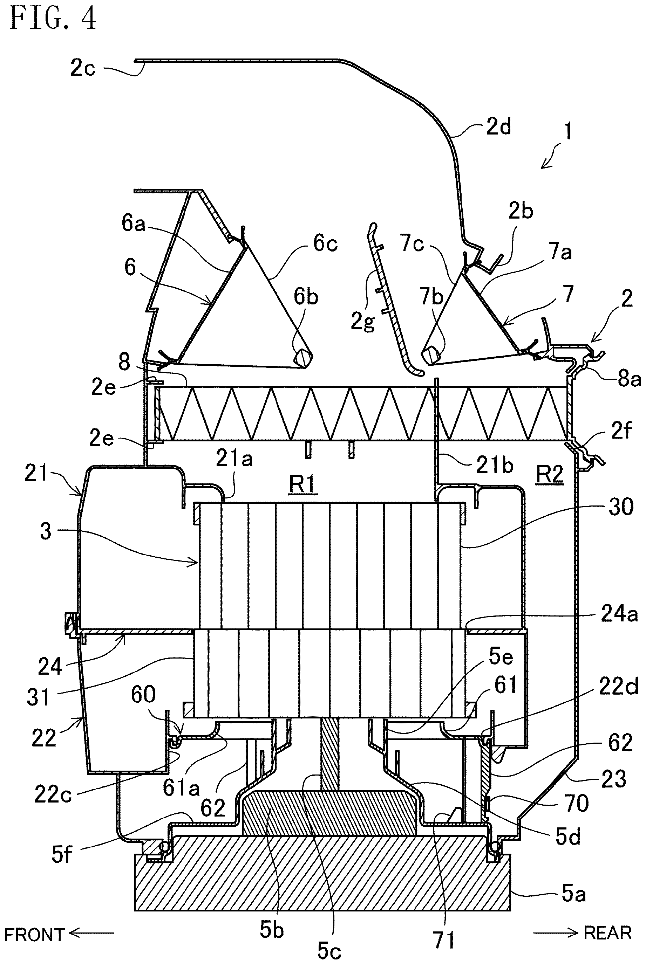

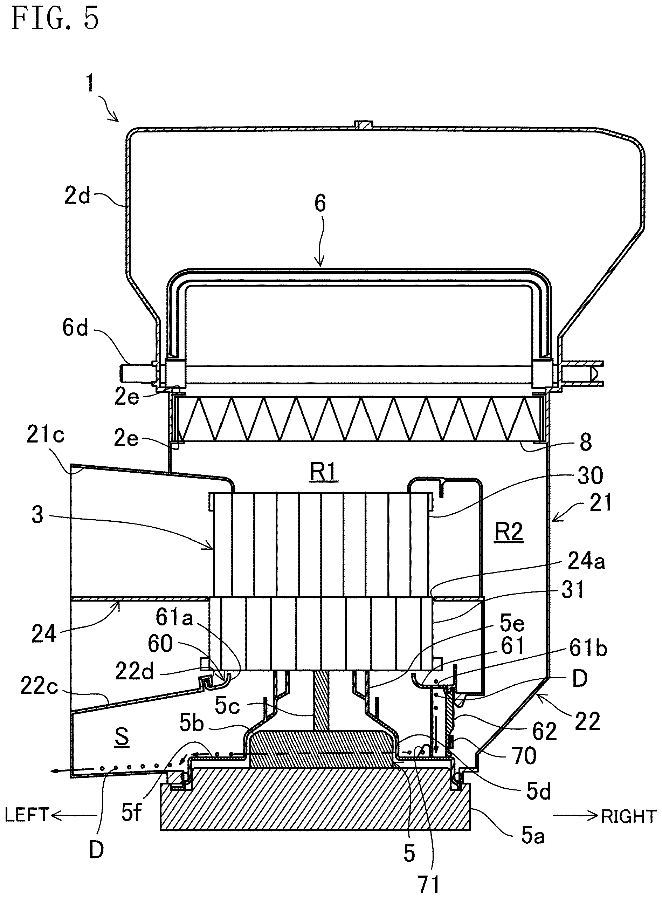

As shown also in FIGS. 4 and 5, the vehicle air-conditioning air blower 1 includes a blowing casing 2, a blower fan 3, a motor 5 for rotationally driving the blower fan 3, a first inside/outside air switching damper 6, a second inside/outside air switching damper 7, an air filter 8, and an inside/outside air switching actuator 9 (illustrated in FIGS. 1 and 2). The blower fan 3, the first and second inside/outside air switching dampers 6 and 7, and the air filter 8 are housed in the blowing casing 2.

An upper portion of the blowing casing 2 has front and rear inside air inlets 2a and 2b illustrated in FIG. 2 and other figures, and an outside air inlet 2c illustrated in FIG. 4. As illustrated in FIG. 2, the front inside air inlet 2a is formed through a portion of the upper portion of the blowing casing 2 closer to the front end of the blowing casing 2 than a central portion thereof in the front-to-rear direction, and opens to the interior of the cabin. The rear inside air inlet 2b is formed through a portion of the upper portion of the blowing casing 2 closer to the rear end of the blowing casing 2 than the central portion thereof in the front-to-rear direction, and opens to the interior of the cabin. Air in the cabin (inside air) can be introduced into the blowing casing 2 through the front and rear inside air inlets 2a and 2b.

As illustrated in FIG. 4, the upper portion of the blowing casing 2 has an outside air inlet duct portion 2d integrated with the blowing casing 2 to bulge upward from a portion of the blowing casing 2 between the front and rear inside air inlets 2a and 2b. An upper portion of the outside air inlet duct portion 2d extends forward. The outside air inlet 2c opens through a front end of the outside air inlet duct portion 2d. The outside air inlet duct portion 2d is connected to the cowl. The outside air inlet 2c communicates with the outside of the cabin through the cowl. Air outside the cabin (outside air) can be introduced into the blowing casing 2 through the outside air inlet 2c.

As illustrated in FIG. 4, the filter 8 is housed in a portion of the interior of the blowing casing 2 below the front and rear inside air inlets 2a and 2b and the outside air inlet 2c. The filter 8 is formed in the shape of a plate, and extends horizontally. A peripheral portion of the filter 8 is supported by filter support portions 2e provided inside the blowing casing 2. A rear wall portion of the blowing casing 2 has a filter insertion hole 2f through which the filter 8 is to be inserted into the blowing casing 2. The filter insertion hole 2f is closed by a lid portion 8a configured as a rear end portion of the filter 8. Note that the filter 8 may be made of, for example, a general nonwoven fabric.

A partition wall portion 2g is provided above the filter 8 inside the blowing casing 2. The partition wall portion 2g extends vertically, and is slightly inclined so as to be closer to the rear side of the blowing casing 2 toward its lower end portion. An upper portion of the interior of the blowing casing 2 has a first air passage R1 in front of the partition wall portion 2g, and a second air passage R2 behind the partition wall portion 2g. The width of the first air passage R1 in the front-to-rear direction is set to be greater than that of the second air passage R2 in the front-to-rear direction, and the cross-sectional area of the first air passage R1 is larger than that of the second air passage R2.

An upstream end portion (upper end portion) of the first air passage R1 communicates with the front inside air inlet 2a and the outside air inlet 2c. An upstream end portion (upper end portion) of the second air passage R2 communicates with the rear inside air inlet 2b and the outside air inlet 2c. The first and second air passages R1 and R2 communicate with the common outside air inlet 2c, while communicating with the separate inside air inlets 2a and 2b, respectively. This allows inside air and outside air to be introduced into both of the first and second air passages R1 and R2.

The first inside/outside air switching damper 6 is disposed in front of the partition wall portion 2g inside the blowing casing 2, and includes a closing plate portion 6a, a shaft portion 6b, and end plate portions 6c. The closing plate portion 6a extends in the lateral direction. The shaft portion 6b also extends in the lateral direction, and is supported by both lateral side wall portions of the blowing casing 2 so as to be turnable. The end plate portions 6c are respectively provided near both lateral ends of the shaft portion 6b. The end plate portions 6c extends radially from the shaft portion 6b, and are respectively arranged adjacent to the lateral end portions of the closing plate portion 6a. The closing plate portion 6a, the shaft portion 6b, and the end plate portions 6c are integrated together. The first inside/outside air switching damper 6 turns around the center line of the shaft portion 6b. This allows switching to be made between the state where the first inside/outside air switching damper 6 has turned forward as shown in FIG. 4 and the state where the first inside/outside air switching damper 6 has turned rearward although not shown. If the first inside/outside air switching damper 6 has turned forward, the front inside air inlet 2a is closed, and the outside air inlet 2c is opened. This prevents the inside air from flowing into the blowing casing 2, and allows the outside air to be introduced into an upstream portion of the first air passage R1. On the other hand, if the first inside/outside air switching damper 6 has turned rearward, the front inside air inlet 2a is opened, and the outside air inlet 2c is closed. This prevents the outside air from flowing into the blowing casing 2, and allows the inside air to be introduced into the upstream portion of the first air passage R1.

The second inside/outside air switching damper 7 is disposed behind the partition wall portion 2g inside the blowing casing 2, and includes a closing plate portion 7a, a shaft portion 7b, and end plate portions 7c, just like the first inside/outside air switching damper 6. The second inside/outside air switching damper 7 turns around the center line of the shaft portion 7b. This allows switching to be made between the state where the second inside/outside air switching damper 7 has turned rearward as shown in FIG. 4 and the state where the second inside/outside air switching damper 7 has turned forward although not shown. If the second inside/outside air switching damper 7 has turned rearward, the rear inside air inlet 2b is closed, and the outside air inlet 2c is opened. This prevents the inside air from flowing into the blowing casing 2, and allows the outside air to be introduced into an upstream portion of the second air passage R2. On the other hand, if the second inside/outside air switching damper 7 has turned forward, the rear inside air inlet 2b is opened, and the outside air inlet 2c is closed. This prevents the outside air from flowing into the blowing casing 2, and allows the inside air to be introduced into the upstream portion of the second air passage R2.

The first and second inside/outside air switching dampers 6 and 7 are driven by the inside/outside air switching actuator 9 illustrated in FIGS. 1, 2, and other figures. Although not shown, the inside/outside air switching actuator 9 is controlled by an air-conditioning control apparatus. A link member 9a engages with the shaft portion 6b of the first inside/outside air switching damper 6 and the shaft portion 7b of the second inside/outside air switching damper 7, and is turned by the inside/outside air switching actuator 9 to allow the first and second inside/outside air switching dampers 6 and 7 to interlock with each other. Since a well-known technique can be used for the structure in which the first and second inside/outside air switching dampers 6 and 7 interlock with each other using the link member 9a, the structure will not be described in detail. Further, the first and second inside/outside air switching dampers 6 and 7 may be separately driven without using the link member 9a.

In this embodiment, the first and second inside/outside air switching dampers 6 and 7 are driven as follows. Specifically, as illustrated in FIG. 4, an optional one of three modes, i.e., an outside-air introduction mode, an inside-air circulation mode, and an inside-outside air double flow mode, can be selected. In the outside-air introduction mode, the first inside/outside air switching damper 6 is turned forward, and the second inside/outside air switching damper 7 is turned rearward. In the inside-air circulation mode, the first inside/outside air switching damper 6 is turned rearward, and the second inside/outside air switching damper 7 is turned forward. In the inside-outside air double flow mode, the first inside/outside air switching damper 6 is turned forward, and the second inside/outside air switching damper 7 is turned forward.

In the outside-air introduction mode, since the first inside/outside air switching damper 6 turns forward, and the second inside/outside air switching damper 7 turns rearward, only outside air is introduced into the first and second air passages R1 and R2. In the inside-air circulation mode, the first inside/outside air switching damper 6 turns rearward, and the second inside/outside air switching damper 7 turns forward. This allows only inside air to be introduced into the first and second air passages R1 and R2. In the inside-outside air double flow mode, the first inside/outside air switching damper 6 turns forward, and the second inside/outside air switching damper 7 turns forward. This allows outside air to be introduced into the first air passage R1, and allows inside air to be introduced into the second air passage R2. The inside-outside air double flow mode is used during heating.

Switching is made among the inside-air circulation mode, the outside-air introduction mode, and the inside-outside air double flow mode by a well-known automatic air-conditioning control technique. Selecting the inside-outside air double flow mode allows outside air, which is relatively dry in winter, to be fed to a defrost outlet to successfully defog a windshield glass, and allows relatively warm inside air to be fed to a heat outlet to improve heating efficiency.

A scroll casing 20 housing the blower fan 3 is provided below the inside air inlets 2a and 2b and the outside air inlet 2c of the blowing casing 2. As illustrated in FIGS. 1 and 2, the scroll casing 20 is divided into an upper scroll casing 21 in which a portion of the blower fan 3 provided with upper blades (first blades) 30 is housed, and a lower scroll casing 22 in which a portion of the blower fan 3 provided with lower blades (second blades) 31 is housed. A lower portion of the upper scroll casing 21 and an upper portion of the lower scroll casing 22 are fitted to each other, thereby integrating the upper and lower scroll casings 21 and 22 together. The upper and lower blades 30 and 31 may also be referred to as "blades."

A bottom wall member 23 is provided for a lower portion of the scroll casing 20. The bottom wall member 23 is a component of the scroll casing 20. The upper scroll casing 21, the lower scroll casing 22, and the bottom wall member 23 form the scroll casing 20. Further, a partition plate 24 that partitions the interior of the scroll casing 20 into upper and lower spaces is disposed inside the scroll casing 20, and is also a component of the scroll casing 20.

An upper wall portion of the upper scroll casing 21 has a substantially circular first bell mouth orifice 21a (upper bell mouth orifice) 21a that opens to the interior of the blowing casing 2. The first bell mouth orifice 21a faces a lower surface of the filter 8, and communicates with the first air passage R1. The upper side of the blower fan 3 is positioned directly below the first bell mouth orifice 21a. That is, the first bell mouth orifice 21a also faces the upper side of the blower fan 3. The upper side of the blower fan 3 is a side on which air is sucked, and air is sucked from this upper side of the blower fan 3.

The upper wall portion of the upper scroll casing 21 is provided with a protruding wall portion 21b protruding upward. The protruding wall portion 21b is positioned behind the edge of the first bell mouth orifice 21a, and extends in the lateral direction. An upper end of the protruding wall portion 21b reaches an area near the lower end portion of the partition wall portion 2g. The protruding wall portion 21b and the partition wall portion 2g partition a portion of the interior of the blowing casing 2 above the upper scroll casing 21 into front and rear spaces. As a result, the first air passage R1 is formed in front of the protruding wall portion 21b and the partition wall portion 2g, and the second air passage R2 is formed behind the protruding wall portion 21b and the partition wall portion 2g.

The first air passage R1 communicates with the interior of the upper scroll casing 21 through the first bell mouth orifice 21a. The interior of the upper scroll casing 21 serves as a portion of the first air passage R1. A portion of the blowing casing 2 above the partition plate 24 is defined as the first air passage R1. A portion of the blower fan 3 provided with the upper blades 30 is disposed in the first air passage R1 inside the upper scroll casing 21. The first blower fan 3 rotating inside the upper scroll casing 21 allows the portion of the blower fan 3 provided with the upper blades 30 to send air in the first air passage R1 as air-conditioning air. In other words, the portion of the blower fan 3 provided with the upper blades 30 is a portion of the blower fan 3 that forms an upper one of air flows.

As illustrated in FIG. 4, the partition plate 24 has a through hole 24a through which the blower fan 3 is inserted from the second air passage R2 toward the first air passage R1. The through hole 24a has a diameter larger than the outer diameter of the portion of the blower fan 3 provided with the upper blades 30. Thus, the upper portion of the blower fan 3 can be inserted through the through-hole 24a.

As illustrated in FIG. 2, a front portion of a left side wall portion of the upper scroll casing 21 has an upper air outlet 21c connected to the air conditioning unit. A downstream end of the first air passage R1 communicates with the upper air outlet 21c, and air in the first air passage R1 is blown out of the upper air outlet 21c to the outside of the upper scroll casing 21.

As illustrated in FIG. 4, the second air passage R2 extends downward through a rear portion of the interior of the upper scroll casing 21, and a lower end portion of the second air passage R2 reaches the bottom wall member 23. A lower wall portion of the lower scroll casing 22 is spaced apart upward from the bottom wall member 23, and the lower end portion of the second air passage R2 is located between the lower wall of the lower scroll casing 22 and the bottom wall member 23.

As illustrated in FIGS. 4 and 5, a bell mouth component 60 is provided inside the scroll casing 20. This bell mouth component 60 is a component of the vehicle air-conditioning air blower 1 and is a separate member from the scroll casing 20. The bell mouth component 60 further includes a bell mouth plate that has a second bell mouth orifice (lower bell mouth orifice) 61a disposed to face the lower side of the blower fan 3 and extending in the radial direction of the blower fan 34, and a plurality of legs (wind shields) 62. The bell mouth plate 61 and the legs 62 are made of a resin material, and are integrally molded.

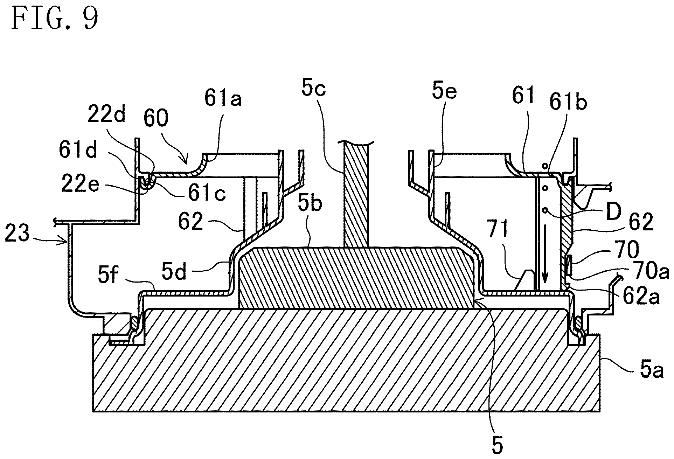

As illustrated in FIG. 9, the lower wall portion of the lower scroll casing 22 has a substantially circular attachment hole 22d to which the bell mouth component 60 is attached. The attachment hole 22d is positioned concentrically with the first bell mouth orifice 21a and is larger than the second bell mouth orifice 61a. The edge of the attachment hole 22d of the lower scroll casing 22 has a protrusion 22e protruding downward. The protrusion 22e extends continuously in the circumferential direction of the attachment hole 22d and is concentrically with the attachment hole 22d.

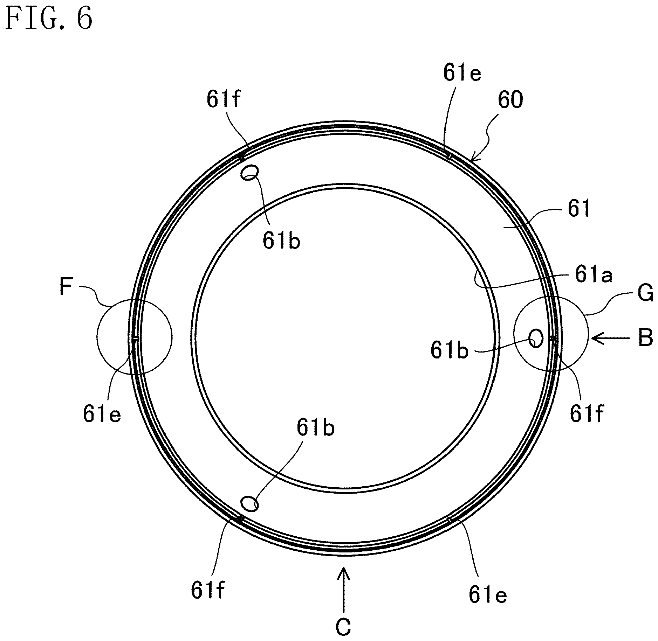

The second bell mouth orifice 61a is substantially circular, and is positioned concentrically with the first bell mouth orifice 21a in a plan view. The second bell mouth orifice 61a can have a diameter larger than that of the first bell mouth orifice 21a. As illustrated in FIG. 6, since the bell mouth plate 61 has a second bell mouth orifice 61a, the inner peripheral portion of the bell mouth plate is formed to be substantially circular. The outer peripheral portion of the bell mouth plate 61 is also formed to be substantially circular. The bell mouth plate 61 is generally formed in an annular shape, and generally has the same width in the circumferential direction of the bell mouth plate 61.

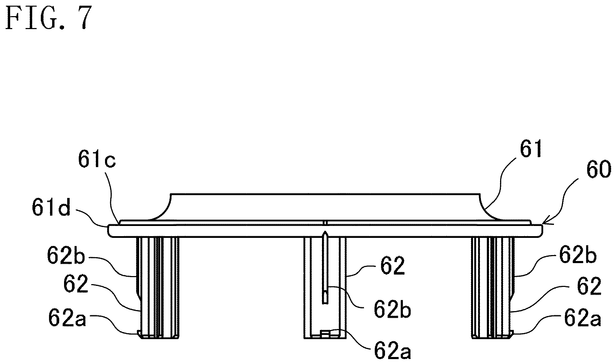

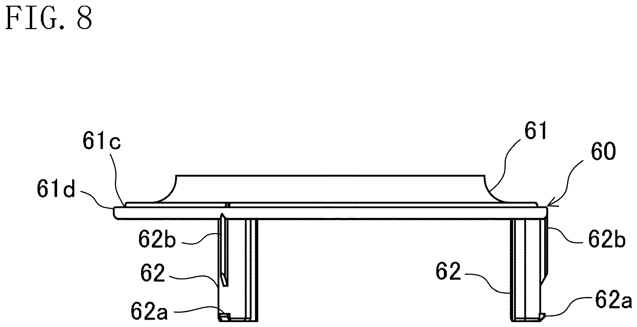

As illustrated in FIGS. 7 and 8, the inner circumferential side of the bell mouth plate 61 has a curved portion curved upward toward the second bell mouth orifice 61a. The outer circumferential side of the bell mouth plate 61 than the curved portion has a flat portion. This flat portion has a plurality of drainage holes 61b spaced apart from each other in the circumferential direction, as illustrated in FIG. 6. That is, the outer circumferential side of the bell mouth plate 61 than the second bell mouth orifice 61a has drainage holes 61b for draining water on the top of the bell mouth plate 61 downward of the bell mouth plate 61, and these drainage holes 61b avoid water on the top of the bell mouth plate 61 from accumulating and remaining.

The drainage holes 61b may be arranged at regular intervals or irregular intervals in the circumferential direction of the bell mouth plate 61, i.e., in the circumferential direction of the blower fan 3. The number of the drainage holes 61b in this embodiment is three, but may be one, two, or four or more. The drainage holes 61b may be circular or oval, and may further be in a slit shape, a rectangular shape, or any other shape.

The bell mouth plate 61 of the bell mouth component 60 has a fitting portion 61c that is fitted to a protrusion 22e of the lower scroll casing 22. The fitting portion 61c is a recess opening upward and extends continuously in the circumferential direction of the second bell mouth orifice 61a so as to surround the second bell mouth orifice 61a. The outer wall portion 61d of the fitting portion 61c protrudes upward and continuously extends in the circumferential direction of the second bell mouth orifice 61a. When the protrusion 22e of the lower scroll casing 22 is inserted into the fitting portion 61c, the fitting portion 61c is fitted to the protrusion 22e.

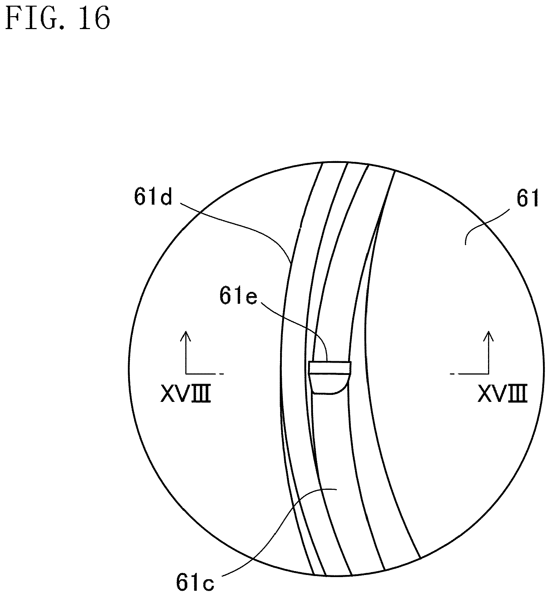

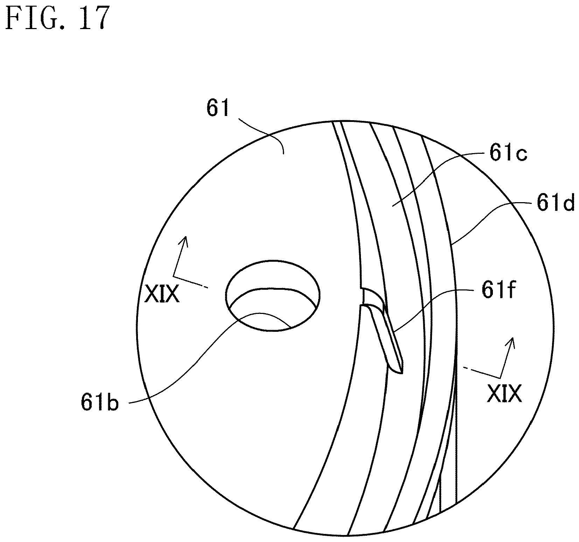

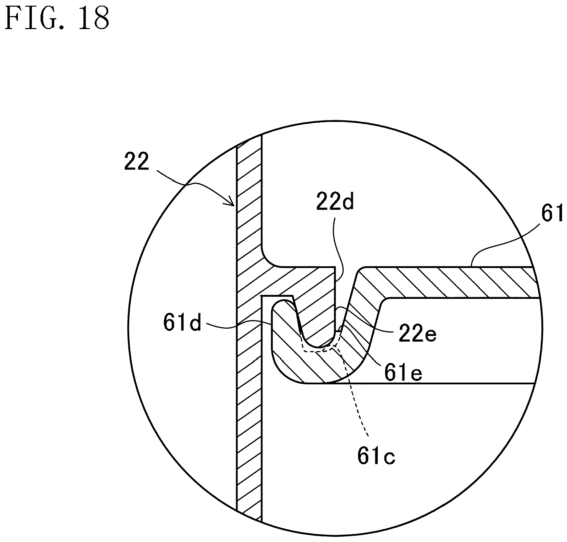

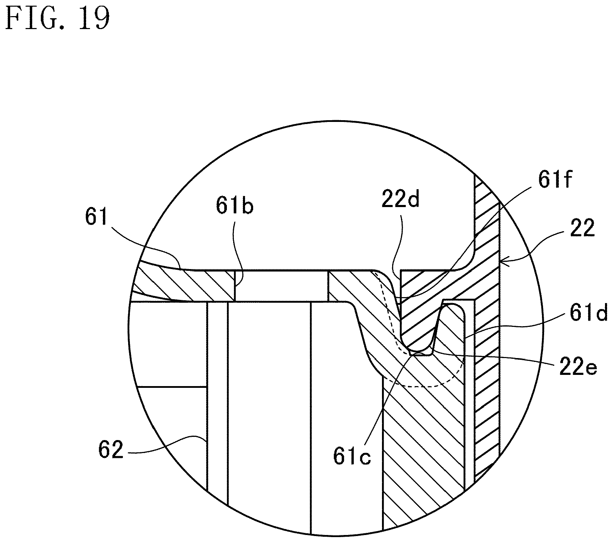

As illustrated in FIG. 6, the inner surface of the fitting portion 61c of the bell mouth plate 61 has first projections 61e and second projections 61f in contact with the outer surfaces of the respective protrusions 22e of the lower scroll casing 22. As illustrated in FIGS. 16 and 18, each of the first projections 61e projects upward from the bottom of the fitting portion 61c, and is disposed to be in press contact with the outer surface of the corresponding protrusion 22e of the lower scroll casing 22 in the axial direction of the rotation shaft 5c. As illustrated in FIGS. 17 and 19, each of the second projections 61f projects toward the outer wall portion 61d from the surface facing the outer wall portion 61d in the inner surface of the fitting portion 61c and disposed to be in press contact with the outer surface of the corresponding protrusion 22e of the lower scroll casing 22 in the axial direction of the rotation shaft 5c.

The first projections 61e are spaced apart from each other in a circumferential direction of the second bell mouth orifice 61a. The second projections 61e are spaced apart from each other in a circumferential direction of the second bell mouth orifice 61a. The first projections 61e and the second projections 61f are alternately provided in the circumferential direction of the second bell mouth orifice 61a. The number of the first projections 61e and the number of the second projections 61f are not limited to three, and may be two or less, four or more.

Each of the first projections 61e is positioned between the legs 62 (will be described later) apart from each other in the circumferential direction of the rotation shaft 5c. Each of the second projections 61f is positioned at the corresponding leg 62 in the circumferential direction of the rotation shaft 5c and corresponds to the leg 62 in the circumferential direction of the rotation shaft 5c. Therefore, the legs 62 are located below the second projections 61f.

Each leg 62 extends downward from the circumference of the opening of the corresponding drainage hole 61b on the lower surface of the bell mouth plate 61 and supports the bell mouth plate 61 from below. Since each leg 62 extends from the circumference of the opening of the corresponding drainage hole 61b, three legs are provided in this embodiment. The number of legs 62 may not be the same as that of drainage holes 61b, either of the numbers may be higher than the other.

As illustrated in FIGS. 5, 7, and 9, each of the legs 62 has a recessed cross section opening inward in the radial direction of the blower fan 3. With this recessed cross section, air flowing from outward to inward in the radial direction of the blower fan 3 at the time of rotation of the blower fan 3 is less likely to flow inward of the legs 62. Thus, the legs 62 serve as wind shields that avoid wind from reaching the circumferences of the openings of the respective drainage holes 61b.

The lower end of each of the legs 62 is in contact with the bottom surface of the scroll casing 20. In this embodiment, although the detail will be described later, since the motor flange 5f of the motor 5 is the outer peripheral portion of the cover 5d, the lower end of each of the legs 62 is in contact with the motor flange 5f which serves as the bottom surface of the scroll casing 20 from above, thereby supporting the legs 62 by the motor flange 5f. Accordingly, the bell mouth component 60 is supported against the cover 5d.

The lower end of each of the legs 62 is integrated together with the corresponding engaging claw (engagement portion) 62a. The engaging claw 62a is engaged with the motor flange 5f with the motor flange 5f detached from the scroll casing 20, and is configured such that the bell mouth component 60 is integrated together with the motor flange 5f with the bell mouth component 60 not fixed to the motor flange 5f. Note that the state in which the bell mouth component is not fixed to the motor flange means that the bell mouth component 60 is displaceable without fixing to a certain position and is movable toward the motor flange 5f. The engaging claw 62a protrudes outward in the radial direction of the blower fan 3 from the lower end of the corresponding leg 62. The leg 62 is provided with a protrusion 62b extending vertically.

The lower end portion of the second air passage R2 communicates with the interior of the lower scroll casing 22 through the second bell mouth orifice 61a. The interior of the lower scroll casing 22 serves as a portion of the second air passage R2. A portion of the lower scroll casing 22 below the partition plate 24 is defined as a portion of the second air passage R2. A portion of the blower fan 3 provided with the lower blades 31 is disposed in the second air passage R2 inside the lower scroll casing 22. The blower fan 3 rotating allows the portion of the blower fan 3 provided with the lower blades 31 to send air in the second air passage R2 as air-conditioning air. In other words, the portion of the blower fan 3 provided with the lower blades 31 is a portion of the blower fan 3 that forms a lower one of the air flows.

As illustrated in FIG. 2, a front portion of a left side wall portion of the lower scroll casing 22 has a lower air outlet 22c connected to the air conditioning unit. The lower air outlet 22c is located directly below the upper air outlet 21c. A downstream end of the second air passage R2 communicates with the lower air outlet 22c, and air in the second air passage R2 is blown out of the lower air outlet 22c to the outside of the lower scroll casing 22.

The bottom wall member 23 covers a lower end portion of the lower scroll casing 22, and is a cover-like member that covers the lower end portion. A peripheral portion of the bottom wall member 23 is formed so as to be fitted to a peripheral portion of the lower end portion of the lower scroll casing 22 to prevent air from leaking from the gap between the peripheral portion of the bottom wall member 23 and the peripheral portion of the lower end portion of the lower scroll casing 22.

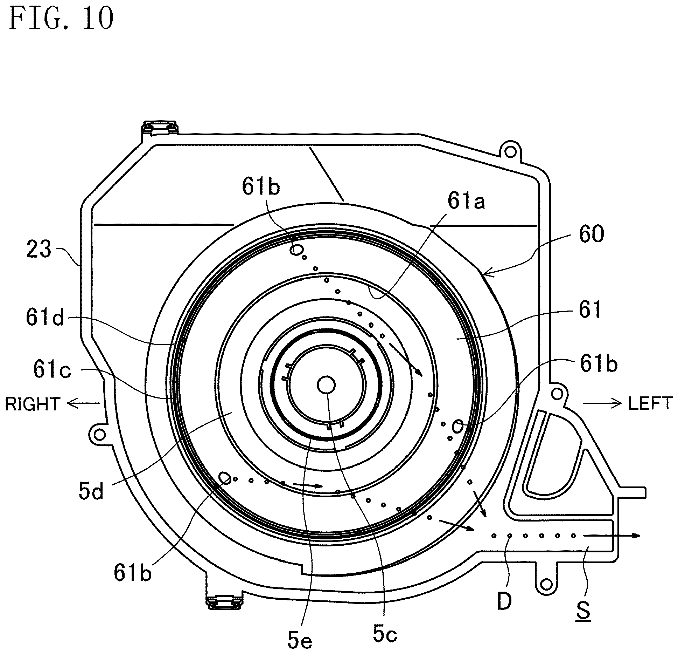

As illustrated in FIGS. 5 and 10, a drainage passage S is formed in the bottom wall member 23. The drainage passage S is positioned below the lower air outlet 22c and is for bringing water on the bottom surface of the bottom wall member 23 to flow in the left direction. The downstream end (left end) of the drainage passage S is connected to the interior of the air-conditioning casing of the air conditioning unit (not shown). This air-conditioning casing houses a cooling heat exchanger and is thus provided with a drainage hole for draining condensed water generated on the surface of the cooling heat exchanger. Accordingly, water entering the air-conditioning casing through the drainage passage S is drained outside through the drainage hole.

As illustrated in FIG. 9, the motor 5 is attached to the bottom wall member 23 via a motor attachment member 5a. The blower fan 3 is disposed above the motor 5. The motor attachment member 5a is fixed to the bottom wall member 23 with a fastening member such as a screw. The motor 5 is attached to the motor attachment member 5a. The motor 5 includes a body 5b including a rotor and other components, a rotation shaft 5c extending vertically, and a cover 5d made of resin, the cover 5d covering the body 5b from above. The rotation shaft 5c protrudes upward from an upper end of the body 5b, passes through the cover 5d, and further protrudes upward beyond the cover 5d. The rotation shaft 5c is disposed concentrically with the first and second bell mouth orifices 21a and 61a. An upper end portion of the rotation shaft 5c is located above the second bell mouth orifice 61a.

The cover 5d has an arc-shaped portion 5e surrounding the rotation shaft 5c. The arc-shaped portion 5e is disposed concentrically with the rotation shaft 5c. The rotation shaft 5c protrudes upward beyond an upper end of the arc-shaped portion 5e.

The blower fan 3 is fixed to the rotation shaft 5c, and rotates together with the rotation shaft 5c. Thus, a voltage applied to the body 5b of the motor 5 brings a turning force of the rotation shaft 5c to be transferred to the blower fan 3. This allows the portion of the blower fan 3 provided with the upper blades 30 to rotate inside the first air passage R1, and allows the portion of the blower fan 3 provided with the lower blades 31 to rotate inside the second air passage R2. The body 5b of the motor 5 is connected to an air-conditioning control apparatus (not shown), which applies a voltage to the body 5b so that the motor 5 rotates at an intended rotational speed.

The motor 5 has a lower portion provided with a motor flange 5f extending in the radial direction of the rotation shaft 5c. The motor flange 5f is fixed to the bottom wall member 23 of the scroll casing 20 so as to be sandwiched between the motor attachment member 5a and the bottom wall member 23 from above and below. The motor flange 5f is the outer peripheral portion of the cover 5d, and serves as the bottom wall portion of the scroll casing 20 as shown in FIG. 9, for example.

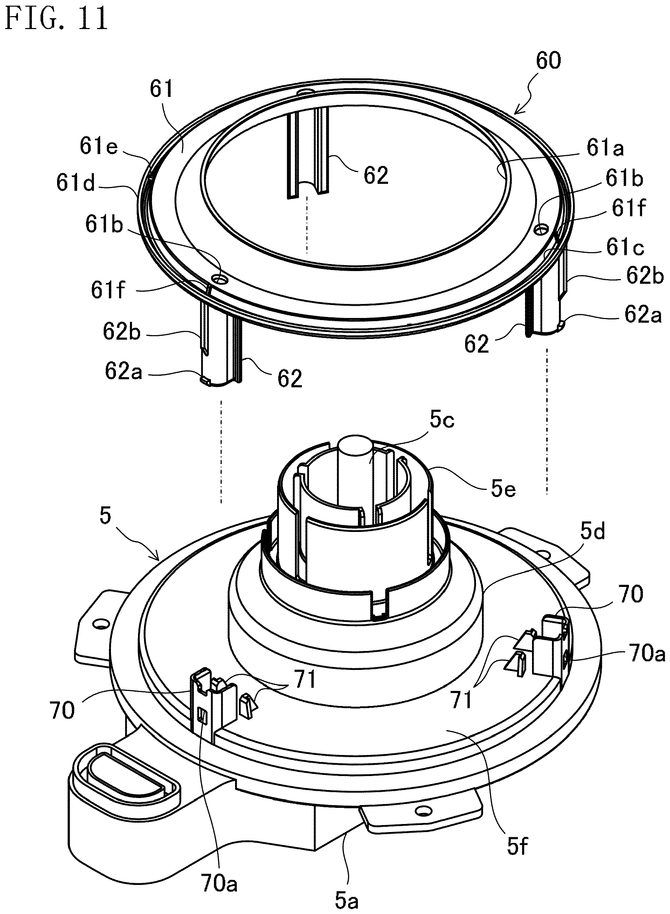

As shown in FIG. 11, the motor flange 5f has holders 70 holding the respective legs 62 of the bell mouth component 60 and supports 71 supporting the respective legs 62. Each of the holders 70 protrudes upward from the outer peripheral portion of the motor flange 5f, and opens upward such that the lower side of the corresponding leg 62 is inserted into the holder 70 from above. The holder 70 surrounds the outer side surface of the inserted leg 62 in the radial direction of the rotation shaft 5c and both side surfaces of the leg 62 in the circumferential direction of the rotation shaft 5c, and opens inward in the radial direction of the rotation shaft 5c. The holder 70 is provided for each of the legs 62.

The support 71 protrudes upwards from the radially inner side than the holder 70 in the motor flange 5f, and faces the radially inner surface of the corresponding leg 62 such that the leg 62 inserted in the holder 70 does not move toward the radially inner side of the leg 62 by a predetermined amount or more. The support 71 is provided for each of the legs 62.

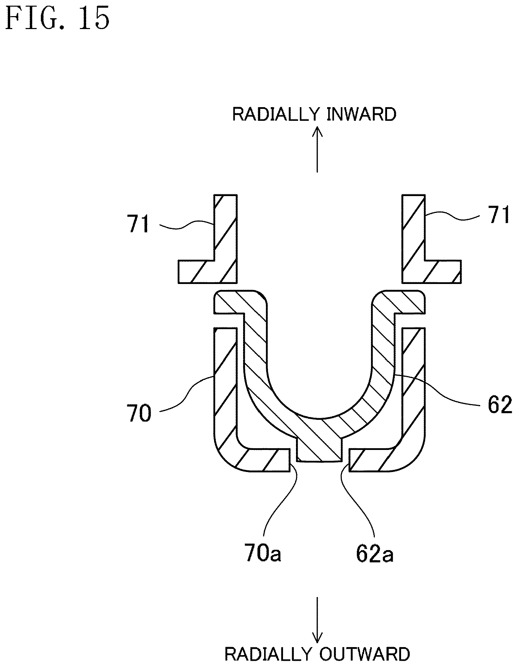

In an outer portion of the holder 70 in the radial direction of the rotation shaft 5c, an engagement hole 70a engaged with the engaging claw 62a of the corresponding leg 62 is formed. When the leg 62 is inserted into the corresponding holder 70 until the engaging claw 62a is positioned inward of the engagement hole 70a, the engaging claw 62a is engaged with the engagement hole 70a. At this time, as shown in FIG. 15, the support 71 faces radially inner side surface of the corresponding leg 62, and a gap is formed between the support 71 and the leg 62. The leg 62 is displaceable in the radial direction of the rotating shaft 5c toward the motor flange 5f by this gap. The amount of displacement of the leg 62 toward the motor flange 5f in the radial direction of the rotation shaft 5c can be set by the size of the gap and may be, for example, about 1 mm. The protrusion height of the engaging claw 62a is set such that the corresponding leg 62 is not detached from the engagement hole 70a when the leg 62 is displaced toward the motor flange 5f in the radial direction of the rotation shaft 5c. By setting the protrusion height of each of the engaging claws 62a as described above, the detachment of the bell mouth component 60 from the motor flange 5f is avoided while the legs 62, i.e., the bell mouth component 60 are displaceable toward the motor flange 5f in the radial direction of the rotation shaft 5c, thereby integrating the bell mouth component 60 and the motor flange 5f together. Specifically, the protrusion height of each of the engaging claws 62a may be a height in which the bell mouth component 60 is not detached from the motor flange 5f.

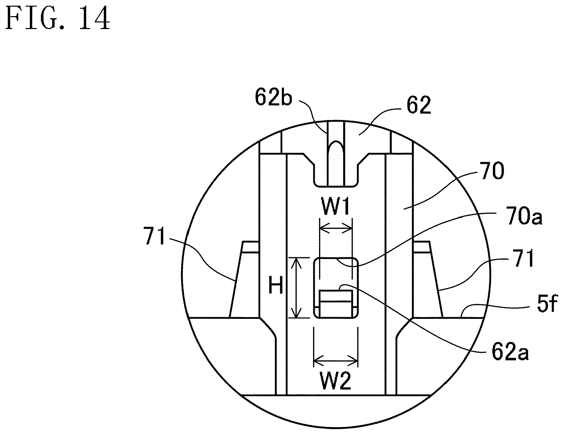

As shown in FIG. 14, the width W1 of the engaging claw 62a of the corresponding leg 62 is narrower than the width W2 of the engagement hole 70a of the corresponding holder 70. This allows the bell mouth component 60 to be displaced toward the motor flange 5f in the axial direction of the rotation shaft 5c. Further, the vertical height H of the engagement hole 70a of the holder 70 is longer than the vertical height of the engaging claw 62a. Specifically, the engaging claw 62a of the corresponding leg 62 is smaller than the engagement hole 70a, thereby allowing the engaging claw 62a to move inside the engagement hole 70a.

Further, the lower end surfaces of the legs 62 are in contact with the upper surface of the motor flange 5f from above, and the fitting portion 61c of the bell mouth plate 61 is fitted to the protrusion 22e of the lower scroll casing 22. Thus, the bell mouth component 60 is sandwiched between the scroll casing 20 and the motor flange 5f from above and below with the motor flange 5f assembled to the scroll casing 20.

Next, how to assemble the bell mouth component 60 will be described. First, as shown in FIG. 11, a bell mouth component 60 is disposed above a motor flange 5f of a motor 5, then is moved downward to insert the lower sides of legs 62a of the bell mouth component 60 into the respective holders 70. Thus, engaging claws 62 of the respective legs 62 are inserted into engagement holes 70a of the respective holders 70. In this state, the bell mouth component 60 is integrated together with the motor 5, but gaps between supports 71 and the legs 62 allow the bell mouth component 60 to be displaced toward the motor flange 5f in the radial direction of a rotation shaft 5c. Further, the engaging claws 62a are smaller than the engagement holes 70a. Thus, the bell mouth component 60 can be displaced toward the motor flange 5f in the circumferential direction of the rotation shaft and vertically.

When the bell mouth component 60 is inserted into the scroll casing 20 thereafter, the fitting portion 61c of the bell mouth plate 61 is fitted to the protrusion 22e of the lower scroll casing 22. Then, the motor 5 is fastened to the scroll casing 20.

### (Advantages of Embodiment)

In this embodiment, the bell mouth component 60 is not fixed to the motor flange 5f with the motor flange 5f detached form the scroll casing 20, thereby allowing the bell mouth component 60 to be displaced toward the motor flange 5f.

Accordingly, even if a variation in a portion between the motor flange 5f and the scroll casing 20, a variation in a portion between the motor flange 5f and the bell mouth component 60, and a variation in a portion between the motor flange 5f and the scroll casing 20 are generated when the scroll casing 20 is attached to the scroll casing 20, displacement of the bell mouth component 60 toward the scroll casing 20 absorbs the variations generated in the respective portions, thereby allowing the motor flange 5f and the bell mouth component 60 to be assembled to the scroll casing 20 without difficulty.

Further, according to the vehicle air-conditioning air blower 1 of this embodiment, when the inside air inlets 2a and 2b are opened, and the outside air inlet 2c is closed by operations of the inside/outside air switching dampers 6 and 7, the vehicle air-conditioning air blower 1 operates in the inside-air circulation mode in which inside air is introduced through the inside air inlets 2a and 2b thereinto. In the inside-air circulation mode, the blower fan 3 rotating allows the inside air introduced through the inside air inlets 2a and 2b to flow through the first and second air passages R1 and R2 and to be then sent as air-conditioning air.

When the inside air inlets 2a and 2b are closed, and the outside air inlet 2c is opened by operations of the inside/outside air switching dampers 6 and 7, the vehicle air-conditioning air blower 1 operates in the outside-air introduction mode in which outside air is introduced through the outside air inlet 2c thereinto. In the outside-air introduction mode, the blower fan 3 rotating allows the outside air introduced through the outside air inlet 2c to flow through the first and second air passages R1 and R2 and to be then sent as air-conditioning air.

Further, if the inside air inlets 2a and 2b and the outside air inlet 2c are operated by operations of the inside/outside air switching dampers 6 and 7, the vehicle air-conditioning air blower 1 operates in the inside-outside air double flow mode. The blower fan 3 rotating allows the outside air introduced through the outside air inlet 2c to flow through the first air passage R1, and allows the inside air introduced through the inside air inlets 2a and 2b to flow through the second air passage R2. Thus, a combination of the outside air and the inside air is sent as air-conditioning air. In other words, the vehicle air-conditioning air blower 1 according to this embodiment can select an optional one of the outside-air introduction mode, the inside-air circulation mode, and the inside-outside air double flow mode, and send air.

During air blowing, the second bell mouth orifice 61a is disposed to face the lower side of the blower fan 3, thereby improving air blowing efficiency. For example, if rainwater or car-washing water enters the interior of the scroll casing 20 through the outside air inlet 2c, it may be accumulated on the top of the bell mouth plate 61. The water on the top of the bell mouth plate 61 flows downward of the bell mouth plate 61 from the drainage hole 61b of the bell mouth plate. The reference character D (indicated by small drops) illustrated in FIGS. 5, 9, and 10 schematically shows water and a flow thereof.

Since each leg 62 extending downward is provided on the circumferences of the opening of the corresponding drainage hole 61b on the lower surface of the bell mouth plate 61, wind is avoided from reaching the circumference of the opening of the drainage hole 61b. Therefore, the water flowing downward of the bell mouth plate 61 is less likely to be splashed by the air sucked into the blower fan 3, thereby allowing drainage performance to be improved.

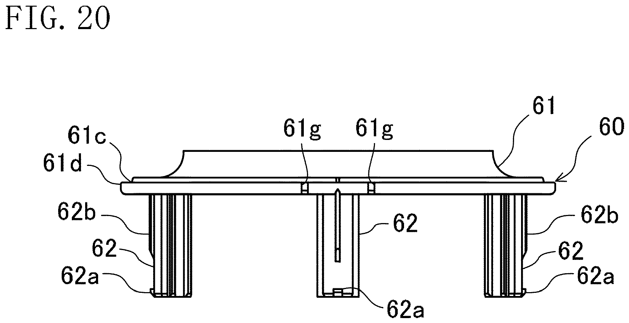

For example, as in the first variation of the embodiment shown in FIG. 20, only portions of the outer wall portion 61d of the fitting portion 61c of the bell mouth component 60 in the circumferential direction have slits 61g extending from the tip to the base end in the protrusion direction of the outer wall portion 61d. This allows the outer wall portion 61d to be easily deformed radially, thereby allowing a fitting force to be reduced and the assembly to be facilitated.

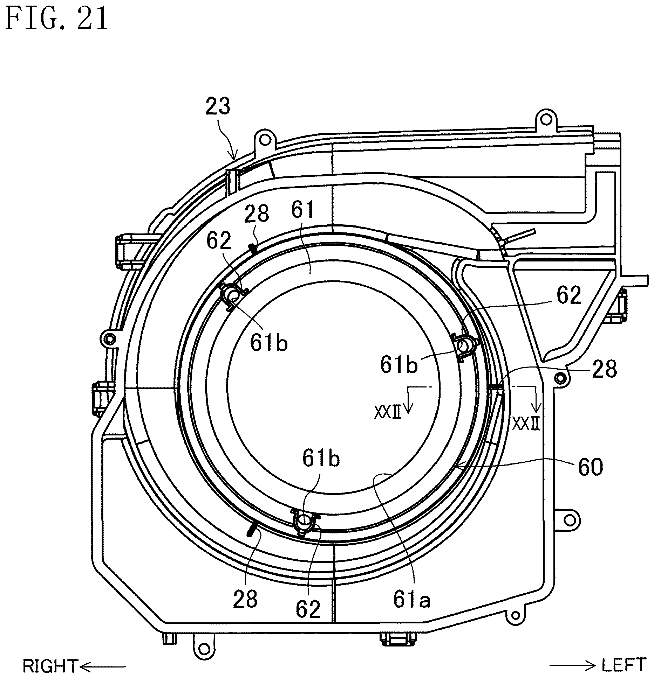

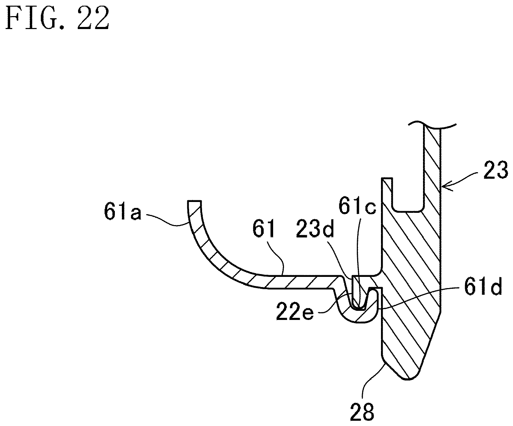

For example, as in the second variation of the embodiment shown in FIGS. 21 and 22, the scroll casing 20 may have a guide portion 28 for guiding the fitting portion 61c of the bell mouth component 60 to the protrusion 22e. The guide portion 28 may include a plurality of guide portions, and the guide portions 28 may be spaced apart in a circumferential direction of the rotation shaft 5c from each other.

### INDUSTRIAL APPLICABILITY

As can be seen from the foregoing description, a vehicle air-conditioning air blower according to the present invention may be used, for example, as an air blower unit for a vehicle air conditioner.

### DESCRIPTION OF REFERENCE CHARACTERS

- 1: Vehicle Air-Conditioning Air Blower
- 2: Blowing Casing
- 2a, 2b: Inside Air Inlet
- 2c: Outside Air Inlet
- 3: Blower Fan
- 5: Motor
- 5b: Body
- 5c: Rotation Shaft
- 5d: Cover
- 20: Scroll Casing
- 22e: Protrusion
- 30: Upper Blade (First Blade)
- 31: Lower Blade (Second Blade)
- 60: Bell Mouth Component
- 61: Bell Mouth Plate
- 61a: Bell Mouth Orifice
- 61c: Fitting Portion
- 61d: Outer Wall Portion
- 62: Leg
- 62a: Engaging Claw (Engagement Portion)
- R1: First Air Passage
- R2: Second Air Passage

## Claims

1. A vehicle air-conditioning air blower (1) configured to be mounted in a vehicle, comprising:
a casing (2) having an inside air inlet (2a, 2b) through which air inside a cabin is introduced into the casing (2), and an outside air inlet (2c) through which air outside the cabin is introduced into the casing (2), the casing (2) further having a first air passage (R1) and a second air passage (R2) each communicating with both of the inside air inlet (2a, 2b) and the outside air inlet (2c), the casing (2) housing an inside/outside air switching damper (6, 7) that opens and closes the inside air inlet (2a, 2b) and the outside air inlet (2c);
a centrifugal blower fan (3) disposed inside the casing (2) and having a first blower fan (3) defined as a portion of the blower fan (3) providing with a first blade (30) and a second blower fan (3) defined as a portion of the blower fan (3) providing with a second blade (31);
a motor (5) disposed below the blower fan (3) and having a rotation shaft (5c) that rotates to drive the blower fan (3) and that extends vertically; and
a bell mouth component (60) being a separate member from the casing (2), the bell mouth component (60) including a bell mouth plate (61) extending in a radial direction of the blower fan (3) and having a bell mouth orifice (61a) disposed to face a lower side of the blower fan (3),
the first blower fan (3) sending air in the first air passage (R1) as air-conditioning air by the first blade (30), the second blower fan (3) sending air in the second air passage (R2) as air-conditioning air by the second blade (31), wherein
the motor (5) has a lower portion that includes a motor flange (5f) extending in the radial direction of the rotation shaft (5c) and being fixed to a bottom wall portion of the casing (2), and
**characterized in that** the bell mouth component (60) includes an engagement claw (62a) engaged with the motor flange (5f) with the bell mouth component (60) not fixed to the motor flange (5f) with the motor flange (5f) detached from the casing (2), and a plurality of legs (62) extending downward from the respective positions of the bell mouth plate (61) apart from each other in a circumferential direction of the rotation shaft (5c) and supported in contact with the motor flange (5f),
the engagement claw (62a) is integral with a lower end of each of the legs (62),
the motor flange (5f) has a holder (70) having an engagement hole (70a) with which the engagement claw (62a) engages,
the engagement claw (62a) has a width narrower than a width of the engagement hole (70a), and
the engagement hole (70a) has a vertical dimension longer than a vertical dimension of the engagement claw (62a).

2. The vehicle air-conditioning air blower (1) of claim 1, wherein
the bell mouth component (60) is sandwiched between the casing (2) and the motor flange (5f) from above and below with the motor flange (5f) assembled to the casing (2).

3. The vehicle air-conditioning air blower (1) of claim 1 or 2, wherein
the bell mouth plate (61) has a fitting portion (61c) fitting to a protrusion (22e) formed in the casing (2), and
the fitting portion (61c) has a projection (61e, 61f) in contact with an outer surface of the protrusion (22e).

4. The vehicle air-conditioning air blower (1) of claim 3, wherein
the projection (61e) is disposed to be in press contact with the outer surface of the protrusion (22e) in an axial direction of the rotation shaft (5c).

5. The vehicle air-conditioning air blower (1) of claim 3, wherein
the projection (61f) is disposed to be in press contact with the outer surface of the protrusion (22e) in a radial direction of the rotation shaft (5c).

6. The vehicle air-conditioning air blower (1) of claim 3, wherein
the projection (61e, 61f) includes first projections (61e) disposed to be in press contact with the outer surface of the protrusion (22e) in an axial direction of the rotation shaft (5c) and second projections (61f) disposed to be in press contact with the outer surface of the protrusion (22e) in a radial direction of the rotation shaft (5c).

7. The vehicle air-conditioning air blower (1) of claim 6, wherein
the first projections (61e) are positioned between the legs (62) apart in the circumferential direction of the rotation shaft (5c).

8. The vehicle air-conditioning air blower (1) of claim 6 or 7, wherein
the second projections (61f) are at the same positions as the respective legs (62) in the circumferential direction of the rotation shaft (5c).

9. The vehicle air-conditioning air blower (1) of any one of claims 3 to 8, wherein
the fitting portion (61c) has a peripheral wall portion (61d) surrounding the bell mouth orifice (61a) and protruding upward, and
only a portion of the peripheral wall portion (61d) in the circumferential direction has a slit (61g) extending from a tip to a base end in a protrusion direction of the peripheral wall portion (61d).

10. The vehicle air-conditioning air blower (1) of any one of claims 3 to 9, wherein
the casing (2) has a guide portion (28) for guiding the fitting portion (61c) to the protrusion (22e) so as to protrude downward.

## Patentansprüche

1. Blasvorrichtung für Fahrzeugklimatisierung (1), die konfiguriert ist, um in einem Fahrzeug montiert zu werden, umfassend:
ein Gehäuse (2) mit einem Innenlufteinlass (2a, 2b), durch den Luft in einem Fahrzeugraum in das Gehäuse (2) eingeführt wird, und einen Außenlufteinlass (2c), durch den Luft außerhalb des Fahrzeugraums in das Gehäuse (2) eingeführt wird, wobei das Gehäuse (2) ferner einen ersten Luftdurchlass (R1) und einen zweiten Luftdurchlass (R2) aufweist, die jeweils mit dem Innenlufteinlass (2a, 2b) und dem Außenlufteinlass (2c) kommunizieren, wobei das Gehäuse (2) eine Innen-/Außenluft-Schalt-Schlagsperre (6, 7) beherbergt, die den Innenlufteinlass (2a, 2b) und den Außenlufteinlass (2c) öffnet und schließt;
ein Zentrifugalgebläse (3), das im Gehäuse (2) angeordnet ist und ein erstes Gebläse (3), das als ein Abschnitt des Gebläses (3) definiert ist und eine erste Schaufel (30) bereitstellt, und ein zweites Gebläse (3), das als ein Abschnitt des Gebläses (3) definiert ist und eine zweite Schaufel (31) bereitstellt, aufweist;
einen Motor (5), der unter dem Gebläse (3) angeordnet ist und eine Rotationswelle (5c) aufweist, die rotiert, um das Gebläse (3) anzutreiben, und die sich vertikal erstreckt; und
eine Trichtermündungskomponente (60), die ein vom Gehäuse (2) separates Element ist, wobei die Trichtermündungskomponente (60) eine Trichtermündungsplatte (61) enthält, die sich in einer Radialrichtung des Gebläses (3) erstreckt und eine Trichtermündungsöffnung (61a) aufweist, die so angeordnet ist, dass sie einer unteren Seite des Gebläses (3) gegenüberliegt,
wobei das erste Gebläse (3) Luft im ersten Luftdurchlass (R1) als Klimatisierungsluft durch die erste Schaufel (30) sendet, das zweite Gebläse (3) Luft im zweiten Luftdurchlass (R2) als Klimatisierungsluft durch die zweite Schaufel (31) sendet, wobei
der Motor (5) einen unteren Abschnitt aufweist, der einen Motorflansch (5f) enthält, der sich in der Radialrichtung der Rotationswelle (5c) erstreckt und an einem Bodenwandabschnitt des Gehäuses (2) befestigt ist, und
**dadurch gekennzeichnet, dass** die Trichtermündungskomponente (60) eine Eingriffsklaue (62a), die mit dem Motorflansch (5f) eingreift, wobei die Trichtermündungskomponente (60) nicht am Motorflansch (5f) befestigt ist, wobei der Motorflansch (5f) vom Gehäuse (2) entfernt ist, und eine Vielzahl von Schenkeln (62), die sich von den jeweiligen Positionen der Trichtermündungsplatte (61) getrennt voneinander in eine Umfangsrichtung der Rotationswelle (5c) nach unten erstrecken und in Kontakt mit dem Motorflansch (5f) gestützt werden, enthält,
die Eingriffsklaue (62a) einstückig mit einem unteren Ende jedes der Schenkel (62) ist,
der Motorflansch (5f) einen Halter (70) mit einem Eingriffsloch (70a) aufweist, mit dem die Eingriffsklaue (62a) eingreift,
die Eingriffsklaue (62a) eine Breite aufweist, die kleiner als eine Breite des Eingriffslochs (70a) ist, und
das Eingriffsloch (70a) eine vertikale Abmessung aufweist, die größer als eine vertikale Abmessung der Eingriffsklaue (62a) ist.

2. Blasvorrichtung für Fahrzeugklimatisierung (1) nach Anspruch 1, wobei
die Trichtermündungskomponente (60) zwischen dem Gehäuse (2) und dem Motorflansch (5f) von oben und unten sandwichförmig angeordnet ist, wobei der Motorflansch (5f) an das Gehäuse (2) montiert ist.

3. Blasvorrichtung für Fahrzeugklimatisierung (1) nach Anspruch 1 oder 2, wobei
die Trichtermündungsplatte (61) einen Anschlussabschnitt (61c) aufweist, der an einen im Gehäuse (2) geformten Vorsprung (22e) anschließt, und
der Anschlussabschnitt (61c) einen Vorsprung (61e, 61f) aufweist, der in Kontakt mit einer Außenfläche des Vorsprungs (22e) ist.

4. Blasvorrichtung für Fahrzeugklimatisierung (1) nach Anspruch 3, wobei
der Vorsprung (61e) angeordnet ist, um in Presskontakt mit der Außenfläche des Vorsprungs (22e) in einer Axialrichtung der Rotationswelle (5c) zu sein.

5. Blasvorrichtung für Fahrzeugklimatisierung (1) nach Anspruch 3, wobei
der Vorsprung (61f) angeordnet ist, um in Presskontakt mit der Außenfläche des Vorsprungs (22e) in einer Radialrichtung der Rotationswelle (5c) zu sein.

6. Blasvorrichtung für Fahrzeugklimatisierung (1) nach Anspruch 3, wobei
der Vorsprung (61e, 61f) erste Vorsprünge (61e), die angeordnet sind, um in Presskontakt mit der Außenfläche des Vorsprungs (22e) in einer Axialrichtung der Rotationswelle (5c) zu sein, und zweite Vorsprünge (61f), die angeordnet sind, um in Presskontakt mit der Außenfläche des Vorsprungs (22e) in einer Radialrichtung der Rotationswelle (5c) zu sein, enthält.

7. Blasvorrichtung für Fahrzeugklimatisierung (1) nach Anspruch 6, wobei
die ersten Vorsprünge (61e) zwischen den Schenkeln (62) entfernt in der Umfangsrichtung der Rotationswelle (5c) positioniert sind.

8. Blasvorrichtung für Fahrzeugklimatisierung (1) nach Anspruch 6 oder 7, wobei
die zweiten Vorsprünge (61f) an denselben Positionen wie die jeweiligen Schenkel (62) in Umfangsrichtung der Rotationswelle (5c) sind.

9. Blasvorrichtung für Fahrzeugklimatisierung (1) nach einem der Ansprüche 3 bis 8, wobei
der Anschlussabschnitt (61c) einen Umfangswandabschnitt (61d) aufweist, der die Trichtermündungsöffnung (61a) umgibt und nach oben vorragt, und
nur ein Abschnitt des Umfangswandabschnitts (61d) in der Umfangsrichtung einen Schlitz (61g) aufweist, der sich von einem Spitzen- zu einem Basisende in einer Vorsprungsrichtung des Umfangswandabschnitts (61d) erstreckt.

10. Blasvorrichtung für Fahrzeugklimatisierung (1) nach einem der Ansprüche 3 bis 9, wobei
das Gehäuse (2) einen Führungsabschnitt (28) zum Führen des Anschlussabschnitts (61c) zum Vorsprung (22e) aufweist, so dass es nach unten vorragt.

## Revendications

1. Soufflante d'air de climatisation de véhicule (1) configurée pour être montée dans un véhicule, comprenant :
un boîtier (2) ayant une entrée d'air intérieur (2a, 2b) à travers laquelle l'air à l'intérieur d'une cabine est introduit dans le boîtier (2), et une entrée d'air extérieur (2c) à travers laquelle l'air à l'extérieur de la cabine est introduit dans le boîtier (2), le boîtier (2) ayant en outre un premier passage d'air (R1) et un deuxième passage d'air (R2) communiquant chacun avec l'entrée d'air intérieur (2a, 2b) et l'entrée d'air extérieur (2c), le boîtier (2) recevant un registre de commutation d'air intérieur/extérieur (6, 7) qui ouvre et ferme l'entrée d'air intérieur (2a, 2b) et l'entrée d'air extérieur (2c) ;
un ventilateur soufflant centrifuge (3) disposé à l'intérieur du boîtier (2) et ayant un premier ventilateur soufflant (3) défini comme une partie du ventilateur soufflant (3) munie d'une première pale (30) et un deuxième ventilateur soufflant (3) défini comme une partie du ventilateur soufflant (3) munie d'une deuxième pale (31) ;
un moteur (5) disposé en dessous du ventilateur soufflant (3) et ayant un arbre de rotation (5c) qui tourne pour entraîner le ventilateur soufflant (3) et qui s'étend verticalement ; et
un composant pavillon (60) étant un élément séparé du boîtier (2), le composant pavillon (60) comprenant une plaque de pavillon (61) s'étendant dans une direction radiale du ventilateur soufflant (3) et ayant un orifice de pavillon (61a) disposé pour faire face à un côté inférieur du ventilateur soufflant (3),
le premier ventilateur soufflant (3) envoyant de l'air dans le premier passage d'air (R1) en tant qu'air de climatisation par la première pale (30), le deuxième ventilateur soufflant (3) envoyant de l'air dans le deuxième passage d'air (R2) en tant qu'air de climatisation par la deuxième pale (31), dans laquelle
le moteur (5) a une partie inférieure qui comprend une bride de moteur (5f) s'étendant dans la direction radiale de l'arbre de rotation (5c) et étant fixée à une partie de paroi inférieure du boîtier (2), et
**caractérisée en ce que** le composant pavillon (60) comprend une griffe d'engagement (62a) engagée avec la bride de moteur (5f), le composant pavillon (60) n'étant pas fixé à la bride de moteur (5f) avec la bride de moteur (5f) détachée du boîtier (2), et une pluralité de pattes (62) s'étendant vers le bas à partir des positions respectives de la plaque de pavillon (61) écartées les unes des autres dans une direction circonférentielle de l'arbre de rotation (5c) et supportées en contact avec la bride de moteur (5f),
la griffe d'engagement (62a) est d'une seule pièce avec une extrémité inférieure de chacune des pattes (62),
la bride de moteur (5f) a un support (70) ayant un trou d'engagement (70a) avec lequel la griffe d'engagement (62a) s'engage,
la griffe d'engagement (62a) a une largeur plus étroite qu'une largeur du trou d'engagement (70a), et
le trou d'engagement (70a) a une dimension verticale supérieure à une dimension verticale de la griffe d'engagement (62a).

2. Soufflante d'air de climatisation de véhicule (1) de la revendication 1, dans laquelle
le composant pavillon (60) est pris en sandwich entre le boîtier (2) et la bride de moteur (5f) par le haut et par le bas avec la bride de moteur (5f) assemblée au boîtier (2).

3. Soufflante d'air de climatisation de véhicule (1) de la revendication 1 ou 2, dans laquelle
la plaque de pavillon (61) a une partie d'ajustement (61c) s'ajustant à une protubérance (22e) formée dans le boîtier (2), et
la partie d'ajustement (61c) a une saillie (61e, 61f) en contact avec une surface externe de la protubérance (22e).

4. Soufflante d'air de climatisation de véhicule (1) de la revendication 3, dans laquelle
la saillie (61e) est disposée de manière à être en contact de pression avec la surface externe de la protubérance (22e) dans une direction axiale de l'arbre de rotation (5c).

5. Soufflante d'air de climatisation de véhicule (1) de la revendication 3, dans laquelle
la saillie (61f) est disposée de manière à être en contact de pression avec la surface externe de la protubérance (22e) dans une direction radiale de l'arbre de rotation (5c).

6. Soufflante d'air de climatisation de véhicule (1) de la revendication 3, dans laquelle
la saillie (61e, 61f) comprend des premières saillies (61e) disposées de manière à être en contact de pression avec la surface externe de la protubérance (22e) dans une direction axiale de l'arbre de rotation (5c) et des deuxièmes saillies (61f) disposées de manière à être en contact de pression avec la surface externe de la protubérance (22e) dans une direction radiale de l'arbre de rotation (5c).

7. Soufflante d'air de climatisation de véhicule (1) de la revendication 6, dans laquelle
les premières saillies (61e) sont positionnées entre les pattes (62) écartées dans la direction circonférentielle de l'arbre de rotation (5c).

8. Soufflante d'air de climatisation de véhicule (1) de la revendication 6 ou 7, dans laquelle
les deuxièmes saillies (61f) se trouvent dans les mêmes positions que les pattes respectives (62) dans la direction circonférentielle de l'arbre de rotation (5c).

9. Soufflante d'air de climatisation de véhicule (1) de l'une quelconque des revendications 3 à 8, dans laquelle
la partie d'ajustement (61c) a une partie de paroi périphérique (61d) entourant l'orifice de pavillon (61a) et faisant saillie vers le haut, et
seulement une partie de la partie de paroi périphérique (61d) dans la direction circonférentielle a une fente (61g) s'étendant d'une pointe à une extrémité de base dans une direction de protubérance de la partie de paroi périphérique (61d).

10. Soufflante d'air de climatisation de véhicule (1) de l'une quelconque des revendications 3 à 9, dans laquelle
le boîtier (2) a une partie de guidage (28) pour guider la partie d'ajustement (61c) vers la protubérance (22e) de manière à faire saillie vers le bas.
